Europäisches Patentamt

European Patent Office

Office européen des brevets

(19)

(11) Veröffentlichungsnummer: **0 080 586**
**B1**

(12) # EUROPÄISCHE PATENTSCHRIFT

(45) Veröffentlichungstag der Patentschrift:
23.07.86

(21) Anmeldenummer: **82109321.8**

(22) Anmeldetag: **08.10.82**

(51) Int. Cl.⁴: **E 04 H 12/08,** E 06 C 7/18,
A 62 B 1/14, B 63 B 15/00

(54) **Vorrichtung zum Festhalten und Sichern von Hublasten an aufrechtstehenden Masten oder Spannseilen.**

(30) Priorität: **14.10.81 DE 3140704**

(43) Veröffentlichungstag der Anmeldung:
**08.06.83 Patentblatt 83/23**

(45) Bekanntmachung des Hinweises auf die Patenterteilung:
**23.07.86 Patentblatt 86/30**

(84) Benannte Vertragsstaaten:
**DE FR GB NL SE**

(56) Entgegenhaltungen:
**FR-A-2 385 881**
**GB-A-1 289 591**
**US-A-3 908 791**
**US-A-4 083 438**

(73) Patentinhaber: **Jachmann, Rolf D., D-3161 Hülptingsen (DE)**

(72) Erfinder: **Jachmann, Rolf D., D-3161 Hülptingsen (DE)**

(74) Vertreter: **Hemmerich, Friedrich Werner, Patentanwälte HEMMERICH- MÜLLER- GROSSE-POLLMEIER Eduard- Schloemann- Strasse 47, D-4000 Düsseldorf 1 (DE)**

EP 0 080 586 B1

## Beschreibung

Die Erfindung bezieht sich auf eine Vorrichtung zum Festhalten und Sichern von Hublasten an aufrechtstehenden Masten, insb. Schiffsmasten, mit einem an dem Mast in dessen Längsrichtung verschiebbar und quer zu dieser Richtung unverschiebbar gehaltenen Gleitansatz mit einer einteilig damit verbundenen Kraglasche, an die ein doppelarmiger Hebel schwenkbar angelenkt ist, der einen die Kraglasche beidseitig einfassenden Einschnitt und dessen dem Mast zugewandtes Hebelende eine konvexe Wölbung aufweisen, deren Mittelpunkt exzentrisch unterhalb der Drehachse bzw. der Lagerbohrung der Anlenkung des doppelarmigen Hebels liegt, dessen anderes Hebelende mit der zu sichernden Last verbindbar ist, wobei der Gleitansatz einen der Mastnut angepaßten Querschnitt aufweist. Eine bekannte Vorrichtung dieser Art (GB-A-1 289 591) weist einen Gleitansatz in der Form eines T-Stückes auf, dessen Stegteil aus dem Kulissenquerschnitt kraft. An diesen Steg sind zwei gleich gleich große und parallel verlaufende Laschen mit etwa Rechteckquerschnitt angelenkt, und die jeweiligen, dem Führungsschlitz der Schienenkulisse zugewandten Ecken der Laschen sind abgerundet und werden bei Einwirkung der Hublast auf das andere Ende des Laschenpaares gegen die seitlichen äußeren Begrenzungsflächen des Führungsschlitzes gepreßt. Dabei entstehen verhältnismäßig hohen Flächenpressungen zwischen den seitlichen Begrenzungsflächen des Führungsschlitzes der Schienenkulisse und der abgerundeten Ecken der Laschen.

Da moderne Masten häufig aus Leichtmetallen hergestellt sind, insb. die Masten von Schiffen, können diese hohen Flächenpressungen Oberflächenverformungen hervorrufen, die so stark sind, daß sie zu Verklemmungen zwischen Laschen und Mast führen und dadurch die Vorrichtung blockieren.

Der Erfindung liegt die Aufgabe zugrunde, die Vorrichtung so zu verbessern, daß die obengenannten Nachteile beseitigt und die damit verbundenen Schwierigkeiten vermieden werden. Diese Aufgabe wird dadurch gelöst, daß die den doppelarmigen Hebel bildende Lasche auf beiden Seitenflächen des dem Mast zugewandten Laschenendes exzentrisch zu der Lagerbohrung aufgeschweißte Kreis- oder Kreisabschnittsscheiben aufweist, wobei die Kantenflächen des Laschenendes und die der Scheiben gemeinsam die konvexe Wölbung bilden, und daß eine, mit einer den Querschnitt der Kraglasche angepaßten Ausnehmung versehene, zwischen dem Gleitansatz und den gewölbten Kantenflächen anzuordnende ebene Scheibe auf der Kraglasche lose verschiebbar ist. Die den doppelarmigen Hebel bildende Lasche wird dabei zweckmäßig aus drei aufeinanderliegenden Laschen zusammengesetzt.

Diese besondere Ausbildung der auf die beiden Seitenflächen des Laschenendes exzentrisch zur Lagerbohrung aufgeschweißten Kreis- oder Kreisabschnittsscheiben erlauben die Anordnung einer auf der Kraglasche lose verschiebbaren Scheibe, mit der sich die erwähnten Oberflächenverformungen und damit Verklemmungen und Blockierungen vermeiden lassen.

Der Gleitansatz der Vorrichtung gleitet, solange die Last vom Tragseil getragen wird, am Mast entlang und folgt dabei den Auf- und Abbewegungen des Tragseils. Bricht das Tragseil oder gibt es wegen eines Schadens im Hubantrieb plötzlich nach, dann bewirkt die Fallbewegung der vom Tragseil nicht mehr getragenen Last eine Schwenkbewegung des mit der Last verbundenen Hebelendes des Doppelhebels nach unten und eine entsprechende Andruckbewegung der konvexen Wölbung des anderen Hebelendes gegen den Außenumfang des Mastes mit der Folge, daß der Gleitansatz gegenüber dem Mast in eine Klemmstellung gebracht wird, die eine weitere Abwärtsbewegung des Gleitansatzes am Mast sicher verhindert, wobei durch die ebene Scheibe der von den Kantenflächen des Laschenendes und den Scheiben ausgeübte hohe spezifisc... Flächendruck entsprechend auf eine größere Fläche verteilt und dadurch verringert wird.

Die Vorrichtung baut sehr klein, läßt sich aus einfachen Stanzteilen zusammensetzen und kann deshalb aus hochfesten, witterungsbeständigen Werkstoffen hergestellt werden. Es bietet sich dabei auch an, die Vorrichtung an Masten anzuwenden, die nicht von vorneherein als Segelmasten eine Mastnut aufweisen, in dem derartige Masten nur für den Zweck des Einbringens der erfindungsgemäßen Vorrichtung mit Nuten ausgestattet werden.

Die Erfindung wird anhand des in der Zeichnung dargestellten Ausführungsbeispiels näher erläutert. In der Zeichnung zeigen

Fig. 1 die Vorrichtung von der Seite gesehen und

Fig. 2 die Draufsicht auf Fig. 1.

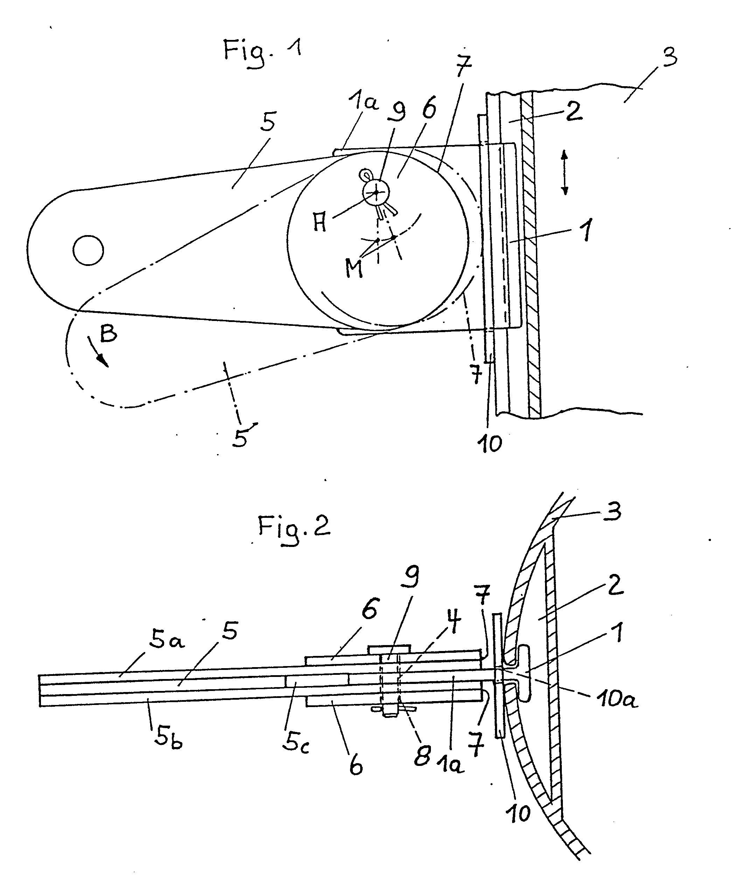

Der hier (vgl. Fig. 2) mit T-förmigem Querschnitt versehene Gleitansatz 1 ist in der Nut 2 des Mastes 3 in Richtung des eingezeichneten Doppelpfeils verschiebbar. Der Gleitansatz 1 ist Teil einer Kraglasche 1a mit einer Lagerbohrung 4. Auf die Kraglasche 1a ist der ebenfalls als Lasche ausgebildete doppelarmige Hebel 5 aufgeschoben; er weist zu diesem Zweck einen die Kraglasche 1a beidseitig einfassenden Einschnitt 5c auf. Auf beide Außenseiten des dem Mast 3 zugewandten Endes der den doppelarmigen Hebel bildenden Lasche 5, sind Kreisscheiben 6 aufgeschweißt, wobei die Kantenflächen der Lasche 5 mit dem dem Mast 3 zugewandten Kreisabschnitt der beiden Scheiben je eine gemeinsame gewölbte Fläche 7 (vgl. Fig. 2) bilden. Die den Doppelhebel 5 bildende Lasche weist ebenfalls eine Bohrung 8 auf und ist über diese mittels eines Bolzens 9 an der Kraglasche 1a angelenkt, wobei die gemeinsame Mittenachse M der beiden Kreisscheiben 6 unterhalb der durch den Bolzen 9 gebildeten Drehachse A liegt.

Zwischen den Kantenflächen 7 und der Nut 2 des Mastes 3 ist eine, mit einer dem Querschnitt der Kraglasche 1a angepaßten Ausnehmung 10 a versehene ebene Scheibe 10 angeordnet, die auf dem Kragansatz 1a lose verschiebbar ist.

Wird die Doppelhebel-Lasche 5 in Richtung des eingezeichneten Pfeils B nach unten geschwenkt, dann bewegen sich die beiden Kantenflächen 7 in die in Fig. 1 strichpunktiert dargestellte Lage und drücken die Scheibe 10 gegen die Außenwandung des Mastes 3, wobei auf die Kraglasche 1a eine Zugkraft ausgeübt wird. Die damit bewirkte Flächenpressung zwischen der von der gewölbten Fläche 7 beaufschlagten Scheibe 10 und der Außenfläche des Mastes 3 sowie den auf den Innenseiten der Nut 2 des Mastes 3 aufliegenden Seitenflächen des T-Flansches des Gleitansatzes 1 hat ein sofortiges und sicheres Festklemmen der Vorrichtung im Mast 3 zur Folge. Wird der Doppelhebel 5 wieder nach oben geschwenkt, dann löst sich diese Klemmverbindung augenblicklich und die Vorrichtung läßt sich wieder leicht nach oben oder nach unten verschieben.

Wie aus Fig. 2 zu ersehen, kann die den Doppelarmhebel 5 bildende Lasche aus drei aufeinanderliegenden Einzelscheiben 5, 5a und 5b gebildet werden, die miteinander verschweißt sind, so daß auch für die Herstellung dieser Lasche keine spanabhebende Arbeit zur Bildung des Einschnitts 5c notwendig wird.

## Patentansprüche

1. Vorrichtung zum Festhalten und Sichern von Hublasten an aufrechtstehenden Masten, insb. Schiffsmasten, mit einem an dem Mast (3) in dessen Längsrichtung verschiebbar und quer zu dieser Richtung unverschiebbar gehaltenen Gleitansatz (1) mit einer einteilig damit verbundenen Kraglasche (1a), an die ein doppelarmiger Hebel (5) schwenkbar angelenkt ist, der einen die Kraglasche (1a) beidseitig einfassenden Einschnitt (5c) und dessen dem Mast (3) zugewandtes Hebelende eine konvexe Wölbung (7) aufweisen, deren Mittelpunkt (M) exzentrisch unterhalb der Drehachse (A) bzw. Lagerbohrung (8) der Anlenkung (9) des doppelarmigen Hebels (5) liegt, dessen anderes Hebelende mit der zu sichernden Last verbindbar ist, wobei der Gleitansatz (1) einen der Mastnut (2) angepaßten Querschnitt aufweist,
dadurch gekennzeichnet,
daß die den doppelarmigen Hebel (5) bildende Lasche auf beiden Seitenflächen des dem Mast (3) zugewandten Laschenendes exzentrisch zu der Lagerbohrung (8) aufgeschweißte Kreis- oder Kreisabschnittsscheiben (6) aufweist, wobei die Kantenflächen des Laschenendes und die der Scheiben (6) gemeinsam die konvexe Wölbung (7) bilden, und daß eine, mit einer dem Querschnitt der Kraglasche (1a) angepaßten Ausnehmung (10a) versehene, zwischen dem Gleitansatz (1) und den gewölbten Kantenflächen angeordnete ebene Scheibe (10) auf der Kraglasche (1a) lose verschiebbar ist.

2. Vorrichtung nach Anspruch 1,
dadurch gekennzeichnet,
daß die den doppelarmigen Hebel (5) bildende Lasche aus drei aufeinanderliegenden Laschen (5a, 5b und 5) zusammengesetzt ist.

## Claims

1. Apparatus for attaching and securing lifting loads to upright masts, particularly ships' masts, with a slide member (1) slidable on the mast (3) in its longitudinal direction and held against sliding transverse to this direction, the member having a collar strap (1a) integrally connected thereto on which a double-armed lever (5) is pivotably journalled, one of the arms having a cut out (5c) surrounding the collar strap (1a) on both sides and the lever end facing the mast (3) having a convex curvature (7), the middlepoint (M) of which lies eccentrically under the rotation axis (A) and the pivot pin bore (8) of the journalling (9) of the double-armed lever (5), the other lever end being connectable to the load to be secured, wherein the slide member (1) has a cross section corresponding to the mast groove (2)
characterised in that
the strap forming the double armed lever (5) has on both side faces of the tongue ends facing the mast (3) circular or part-circular discs (6) welded on eccentric to the pivot pin bore (8), so that the edge faces of the tongue ends and of the discs together form the convex curvature (7), and in that a flat disc (10) provided with a cut out (10a) corresponding to the cross section of the collar strap (1a) arranged between the slide member (1) and the curved edge surfaces is freely slidable on the collar strap (1a).

2. Apparatus according to Claim 1,
characterised in that
the strap forming the double armed lever (5) is assembled from three juxtaposed straps (5a, 5b and 5).

## Revendications

1. Dispositif de maintien et de blocage de charges de levage sur des mâts verticaux, en particulier sur des mâts de navire, qui comporte une saillie mobile par glissement (1) qui peut être déplacée à l'intérieur du mât (3), dans le sens longitudinal de celui-ci, et qui est maintenue de façon à na pas pouvoir être déplacée transversalement à ce sens longitudinal, saillie avec laquelle fait corps une plaque en porte-à-faux ou console (1a), à laquelle est articulé, de façon à pouvoir pivoter, un levier à deux bras (5) qui présente une ouverture en forme d'encoche (5c) prenant des deux côtés la plaque en porte-à-faux (1a), levier dont l'extrémité dirigée vars le mât présente une incurvation convexe (7) dont le centre (M) se trouve excentriquement en dessous de l'axe de rotation (A) et du passage de montage (8) de l'articulation (9) du levier à deux bras (5), dont l'autre extrémité peut être reliée ou fixée à la charge à bloquer, la saillie mobile par glissement (1) présentant une section transversale adaptée à la voie de glissement (2) formée dans le mât, caractérisé en ce que le dispositif formant le levier à deux bras (5) comporte des plateaux (6) circulaires ou en partie da cercle, qui sont soudés aux deux faces latérales de l'extrémité de la plaque en porte-à-faux dirigée vers le mât (3) excentriquement par rapport au passage de montage (8), les faces de bord de l'extrémité de la plaque en porte-à-faux et celles des plateaux (6) formant ensemble le bombement ou partie convexe (7), et en ce qu'un plateau plat (10), prévu entre la saillie mobile par glissement (1) et les faces de bord bombées et percées d'une ouverture (10a) adaptée à la section transversale de la plaque en porte-à-faux (1a), peut être déplacé librement sur la plaque en porte-à-faux (1a).

2. Dispositif suivant la revendication 1, caractérisé en ce que le dispositif formant le levier à deux bras (5) se compose de trois plaques superposées (5a, 5b et 5).

Fig. 1

Fig. 2